# EUROPÄISCHE PATENTSCHRIFT

(11) **EP 0 563 693 B1**
(45) Veröffentlichungstag und Bekanntmachung des Hinweises auf die Patenterteilung: **29.05.1996**
(21) Anmeldenummer: 93104473.9
(22) Anmeldetag: 18.03.1993
(51) Int. Cl.: B62D 7/15

(54) **Hinterachslenkvorrichtung für ein Kraftfahrzeug**
Rear wheel steering device for motor cars
Dispositif de direction des roues arrière d'un véhicule automobile

(30) Priorität: 31.03.1992 EP 92710010
(43) Veröffentlichungstag der Anmeldung: 06.10.1993
(73) Patentinhaber: SIEMENS AKTIENGESELLSCHAFT, D-80333 München (DE); Mannesmann Rexroth GmbH, D-97813 Lohr (DE)
(72) Erfinder: Ulm, Michael, Dr.-Ing., W-8401 Alteglofsheim (DE); Lacher, Franz, Dipl.-Ing., W-8409 Tegernheim (DE); Patze, Helmut, Dipl.-Ing., W-8773 Frammersbach (DE); Zaiser, Liebhart, Dipl.-Ing., W-8782 Karlstadt-Wiesenfeld (DE)
(74) Vertreter: Fuchs, Franz-Josef, Dr.-Ing.

(56) Entgegenhaltungen:
- EP-A- 0 439 207
- EP-A- 0 462 553
- WO-A-89/10865
- DE-A- 3 942 494
- US-A- 4 770 264
- PATENT ABSTRACTS OF JAPAN vol. 14, no. 311 (M-994)(4254) 4. Juli 1990 & JP-A-02 102 876 (NISSAN) 16. April 1990

## Beschreibung

Die Erfindung betrifft eine Hinterachslenkvorrichtung nach dem Oberbegriff von Anspruch 1. Solche Lenkvorrichtungen werden in Kraftfahrzeugen verwendet, um die Hinterräder zu lenken. Wichtig ist es dabei, den Hinterachslenkwinkel mit hoher Genauigkeit zu verstellen, obwohl störende Aufhängungskräfte an der Hinterachse auf das Stellsystem wirken.

Eine bekannte derartige Lenkvorrichtung (US-A 4 770 264) weist auf: ein elektro-hydraulisches Stellglied, das einen hydraulischen Stellzylinder und ein den Flüssigkeitsstrom zu dem Stellzylinder bestimmendes, elektrisch betätigtes Steuerventil enthält, sowie ein elektronisches Steuergerät, durch das Sensorsignale ausgewertet und Steuersignale für das Stellglied erzeugt werden. Ein elektronisches Steuergerät für eine Kraftfahrzeug-Hinterachslenkung ist z.B. aus WO-A 89/10865 bekannt.

Aufgabe des elektronischen Steuergerätes ist es, die Lage des Stellzylinder-Kolbens zu regeln. Die hydraulische Verstellkomponente ist als Wegeventil ausgeführt, dessen Schieber über einen Elektromagnet angesteuert wird. Das Wegeventil steuert Ölvolumenströme im Zu- und Ablauf des hydraulischen Zylinders. Der Ölvolumenstrom zu dem Stellzylinder und damit die Hinterachsverstellung wird durch den elektrischen Strom in dem Elektromagneten, der durch das elektronische Steuergerät gesteuert wird, bestimmt.

Für eine hohe Positioniergenauigkeit der Lenkvorrichtung ist eine genaue Einstellung des Nullpunktes, d.h. der Mittelstellung der Lenkung, wichtig. Bei der bekannten Lenkvorrichtung muß ein Nullpunktstrom in dem Elektromagneten Gleichgewicht mit einer auf den Schieber des Wegeventils einwirkenden Feder ergeben. Bei symmetrischen Wegeventilen, die durch zwei Elektromagnete gesteuert werden, sind bei einer genauen symmetrischen Einstellung die Ölvolumenströme in die Arbeitskammern des Stellzylinders null, wenn die beiden Elektromagnete mit exakt gleichem Grundstrom angesteuert werden.

Die Nullpunkteinstellung erfolgt bislang durch mechanische Verstellung der Federkraft. Dies hat den Nachteil, daß der Justieraufwand bei der Fertigung groß ist. Außerdem können dabei Einflüsse, die nachträglich eine Verschiebung des hydraulischen Nullpunkts bewirken, z.B. Materialalterung, nicht ausgeglichen werden.

Der Erfindung liegt die Aufgabe zugrunde, die Fertigung von elektrohydraulischen Lenkvorrichtungen zu vereinfachen und auch nachträgliche Nullpunktverschiebungen zu kompensieren.

Diese Aufgabe wird durch eine Lenkvorrichtung nach Anspruch 1 gelöst. Vorteilhafte Weiterbildungen der Erfindung sind den Unteransprüchen zu entnehmen.

Ein Ausführungsbeispiel der Erfindung wird im folgenden anhand der Zeichnung erläutert. Es zeigen:
- Figur 1: das Gesamtschaltbild des elektrischen und hydraulischen Teils einer Hinterradlenkung,
- Figur 2: den Lageregelkreis einer elektrohydraulischen Stellvorrichtung der Hinterradlenkung nach Figur 1, und
- Figur 3: eine Adaptionsschaltung, die Bestandteil des Lageregelkreises nach Figur 2 ist.

Eine Hinterradlenkvorrichtung 1 enthält - außer den hier nicht dargestellten mechanischen Lenkungsbestandteilen - im wesentlichen ein elektronisches Steuergerät 2 und eine hydraulische Stellvorrichtung 3 - im folgenden auch als Stellglied bezeichnet - für die Hinterachse eines Kraftfahrzeugs.

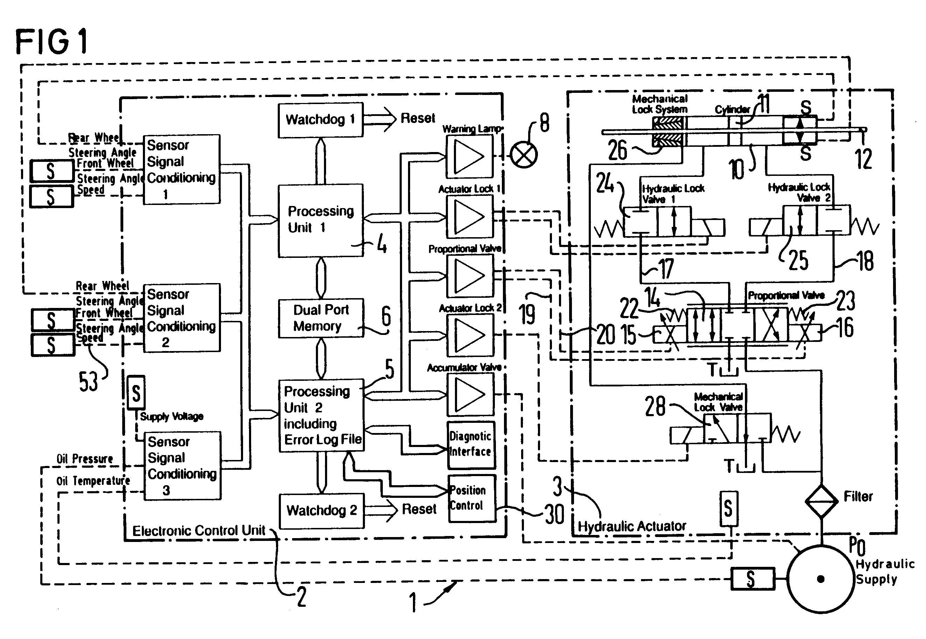

Die Bestandteile und die Struktur des elektronischen Steuergeräts 2 sind aus Figur 1 ersichtlich. Im einzelnen wird das Steuergerät hier nicht erläutert, da es nicht Bestandteil der Erfindung ist. Im übrigen wird auf die vorne genannte WO-Veröffentlichung verwiesen. Nur soviel sei hier erwähnt: das Steuergerät 2 enthält aus Sicherheitsgründen ein gedoppeltes Rechnersystem mit einer ersten Recheneinheit 4 und einer zweiten Recheneinheit 5, die durch einen Speicher 6 mit zwei Ports miteinander verbunden sind. Es verarbeitet die Signale von einer Reihe von Sensoren - in der Zeichnung mit S bezeichnet-, die folgende physikalische Größen erfassen: den Vorderachs-Lenkwinkel, die Fahrzeuggeschwindigkeit, den hydraulischen Versorgungsdruck für die Stellvorrichtung, die Temperatur der Hydraulikflüssigkeit, die Auslenkung des Stellkolbens der hydraulischen Stellvorrichtung 3 als Maß für den Hinterachs-Lenkwinkel und die Versorgungsspannung.

Das Steuergerät 2 erzeugt mehrere Steuersignale für einzelne Bestandteile der hydraulischen Stellvorrichtung 3, die noch erläutert werden, sowie ein Warnsignal, das im Fehlerfall eine Warnlampe 8 aufleuchten läßt.

Die hydraulische Stellvorrichtung 3 weist einen Stellzylinder 10 auf, in dem ein beidseitig mit Druck beaufschlagbarer Stellkolben 11 hin- und her bewegt wird. Eine nach beiden Seiten aus dem Stellzylinder 10 herausragende Kolbenstange 12 ist mit den - nicht dargestellten - Hinterrädern des Kraftfahrzeugs verbunden. Als hydraulische Verstellkomponente dient ein 4/3-Proportional-Wegeventil 14, d.h. ein Wegeventil mit vier Anschlüssen und drei Steuerstellungen, dessen Schieber über Proportional-Elektromagnete 15 und 16 gesteuert wird. Dieses Wegeventil 14 steuert Hydrauliköl-Volumenströme, die über hydraulische Leitungen 17 und 18 dem Stellzylinder 10 zufließen und von ihm abfließen.

Der Volumenstrom zu dem Stellzylinder 10 und damit die Größe der Hinterachsverstellung wird durch den elektrischen Strom bestimmt, der von dem Steuergerät 2 gesteuert und über elektrische Leitungen 19, 20 zu den Elektromagneten 15, 16 fließt. Da das Wegeventil 14 als Proportionalventil ausgeführt ist, ist der Ölvolumenstrom zu dem Stellzylinder 10 kontinuierlich mit dem elektrischen Strom in den Elektromagneten 15, 16 verstellbar. Im stromlosen Zustand wird der Schieber des Wegeventils 14 durch zwei gegeneinanderwirkende Federn 22 und 23 in seine Mittelstellung gedrückt, die dem Nullpunkt oder dem Nullwinkel der Hinterachslenkung entspricht.

Der Stellkolben 11 kann, insbesondere in einem Fehlerfall, in seiner jeweiligen Stellung blockiert werden, und zwar entweder hydraulisch durch zwei in die Rohrleitungen 17, 18 eingefügte, elektromagnetisch betätigte hydraulische Blockierventile 24 und 25, oder mechanisch durch eine Bremse 26, die auf die Kolbenstange 12 einwirkt und bei normalem Betrieb über ein ebenfalls elektromagnetisch betätigtes Hydraulikventil 28 in gelöstem Zustand gehalten wird.

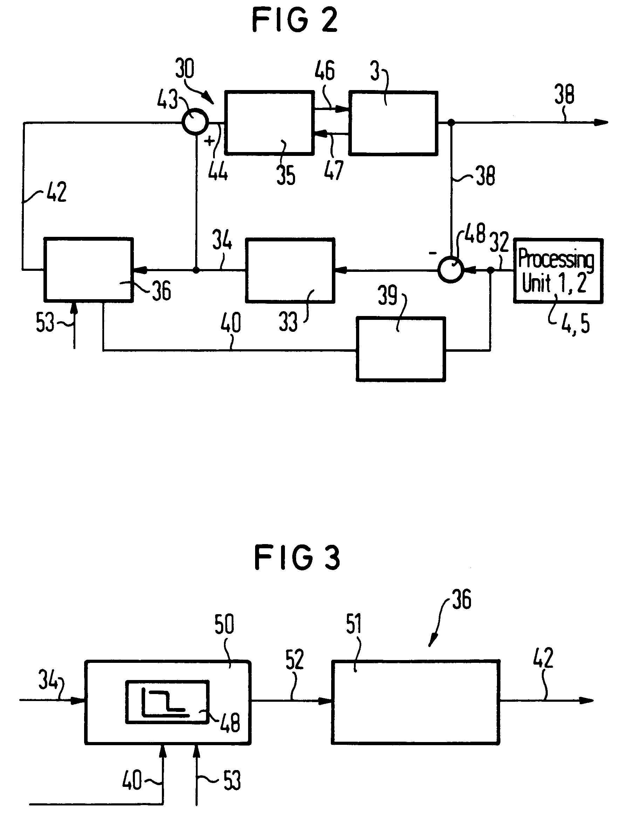

Das elektronische Steuergerät 1 enthält einen die Auslenkung der Hinterräder exakt festlegenden Lageregelkreis 30, der darüberhinaus eine Stromadaption durchführt. Von einer der Recheneinheiten 4, 5 wird entsprechend einem vorgegebenen Lenkalgorithmus in Abhängigkeit von dem Vorderrad-Lenkwinkel, der Fahrzeuggeschwindigkeit und gegebenenfalls weiterer Parameter ein Hinterachs-Lenkwinkel als Lage-Sollwert 32 an einen Lageregler 33 gegeben (Fig. 2), der ein zumindest zeitweise integrales Regelverhalten aufweisen muß. Der Lageregler 33 gibt einen Strom-Sollwert 34 einerseits an einem Stromregler 35 und andererseits an eine Adaptionsschaltung 36. Der Stromregler 35 seinerseits regelt den durch die elektrohydraulische Stellvorrichtung 3 fließenden Steuerstrom und steuert damit die Ist-Lage oder -Auslenkung 38 der Stellvorrichtung. Der Lage-Sollwert 32 wird auch einem Differenzierer 39 zugeführt, der daraus die Soll-Stellgeschwindigkeit 40 ermittelt und auf einen weiteren Eingang der Adaptionsschaltung 36 gibt.

Der Lageregler 33 ist dabei der übergeordnete Lageregler, der den Sollwert 32 für die Hinterachs-Lenkvorrichtung verarbeitet. Stromregler 35 sind in dem hier beschriebenen Ausführungsbeispiel zwei vorhanden, und zwar je einen für die Elektromagneten 15 und 16 des Wegeventils 14. Falls das Wegeventil 14 von nur einem Elektromagneten gesteuert wird, ist auch nur ein Stromregler 35 (wie in der Zeichnung dargestellt) vorhanden. Der Lageregler 33 steuert die Sollwerte für den oder die Stromregler 35 derart, daß eine möglichst hohe Positioniergenauigkeit des Stellgliedes erreicht wird.

Durch die jedem Elektromagneten 15, 16 zugeordneten Stromregler 35 und durch eine ebenfalls zugeordnete Messung des Ist-Stromes 47 werden die elektrischen Ströme durch die Elektromagnete in Form einer unterlagerten Regelung gesteuert. Voraussetzung für die Positioniergenauigkeit des Stellgliedes ist aber, wie bereits erwähnt, eine exakte Nullpunkteinstellung. Bei einem Wegeventil 14 mit zwei Elektromagneten 15, 16 erfordert dies eine möglichst symmetrische Einstellung, d.h., daß die Volumenströme in die oder von den Arbeitskammern des hydraulischen Stellzylinders null sein müssen, wenn die beiden Elektromagnete mit exakt dem gleichen Grundstrom gesteuert werden. Bei Wegeventilen mit nur einem Elektromagneten muß der durch diesen fließende elektrische Strom in der Nullpunktlage ein Gleichgewicht mit der entsprechenden Feder ergeben.

Im Gegensatz zu der bisherigen Nullpunkteinstellung durch Justieren der Federn 22 und 23 wird der hydraulische Nullpunkt der erfindungsgemäßen Stellvorrichtung durch den Lageregelkreis 30 des Steuergeräts 1 selbsttätig ermittelt und eingestellt. Unter der Voraussetzung, daß die hydraulische Verstellkomponente der Hinterachs-Stellvorrichtung im wesentlichen in der Betriebsart "Position Halten" null ist, sind auch die beiden Sollströme für die Stromregler 35 untereinander identisch. Die Betriebsart "Position oder Stellung Halten" ist in der aus Figur 1 ersichtlichen Stellung des Wegeventils 14 gegeben, bei der sowohl der Zustrom als auch der Abfluß von Hydrauliköl zu dem Stellzylinder 10 blockiert sind.

Ist der hydraulische Nullpunkt jedoch nicht identisch mit der Stromgleichheit der beiden Elektromagnete 15, 16, dann gleicht der übergeordnete Lageregler 33 den Fehler durch Ausgabe einer Stellgröße, d.h. eines Strom-Sollwerts, aus. Wird der Strom-Sollwert 34 in der Adaptionsschaltung 36 (vergleiche auch Figur 3) derart tiefpaßgefiltert, daß von dem gesamten Frequenzspektrum praktisch nur der Mittelwert übrig bleibt, und weicht dieser Mittelwert von null ab, so folgt daraus, daß eine Verstellung des hydraulischen Nullpunkts am Wegeventil vorliegt. Dieser Mittelwert wird als Strom-Offset 42 in einem Addierglied 43 zu dem Strom-Sollwert 34 addiert und ergibt einen adaptierten Strom-Sollwert 44, der über den Stromregler 35 bewirkt, daß der hydraulische Nullpunkt und damit die Mittelstellung der Hinterachslenkung wieder eingestellt wird. Das Stellsignal 46 des Stromreglers wird an die Stellvorrichtung 3 übermittelt, während der Ist-Stromwert 47 in dem oder den Elektromagneten der Stellvorrichtung 3 zu dem Stromregler 35 rückgeführt wird. Der Lage-Istwert 38 am Ausgang der Stellvorrichtung 3 wird in einem Verknüpfungsglied 48 von dem Lage-Sollwert 32 subtrahiert, wodurch der Lageregelkreis 30 geschlossen wird.

Die Tiefpaßfilterung in der Adaptionsschaltung 36 kann mit einem Tiefpaßfilter mit sehr hoher Zeitkonstante durchgeführt werden, dies ergibt aber eine sehr lange Reaktionszeit und erfordert aufwendige Filter. Zweckmäßigerweise wird deshalb die Soll-Stellgeschwindigkeit 40 der Stellvorrichtung herangezogen, um den Mittelwert des Strom-Sollwerts 34 zu bilden. Ist die Soll-Stellgeschwindigkeit ungefähr gleich null, dann ist zu erwarten, daß sich nach Ablauf der Ausregelzeit der Strom-Sollwert 34 nicht mehr ändert. Somit kann nach Ablauf dieser Ausregelzeit der Filterung des Strom-Sollwerts begonnen und der Mittelwert gebildet werden. Die Zeitkonstante des dazu in der Adaptionsschaltung 36 verwendeten Tiefpaßfilters 48 (Figur 3) kann dadurch erheblich verkleinert werden, was eine kurze Reaktionszeit bei der Mittelwertbildung zum Folge hat.

Die Adaptionsschaltung 36 enthält einen Mittelwertbildner 50 und einen Diskriminator 51 (Figur 3). Die Addition des Strom-Offsets geschieht auf folgende Art und Weise: ein in dem Mittelwertbildner 50 ermittelter theoretischer Strom-Offset 52, der erforderlich wäre, um die Nullpunktdifferenz auszugleichen, wird in dem Diskriminator 51 mit einem vorgegebenen Schwellwert verglichen. Liegt er über diesem Schwellwert, so wird er als wirksamer Strom-Offset 42 zu dem Strom-Sollwert 34 addiert und gelangt als adaptierter Strom-Sollwert 44 zu dem Stromregler 35 jedes einzelnen Wegeventil-Elektromagneten 15 und 16. Er führt somit zu einer Korrektur des Strom-Sollwerts und wird als neuer wirksamer Strom-Offset 42 gespeichert, der den vorher gespeicherten Wert ersetzt, und zwar bis zu einer erneuten Überschreitung des Schwellwerts. Da somit die Addition des Strom-Offsets 42 nicht als Gesamtbetrag sondern aufeinanderfolgend in kleinen Teilbeträgen erfolgt, wird vermieden, daß im Lageregelkreis 30 unerwünschte Grenzzyklen auftreten.

Noch weiter läßt sich die Filterung des Strom-Sollwerts 34 bei Hinterrad-Lenksystemen vereinfachen, bei denen unterhalb einer vorgegebenen Mindest-Fahrzeuggeschwindigkeit die Hinterachslenkung in der Nulllage gehalten wird, indem das Unterschreiten dieser Mindestgeschwindigkeit festgestellt wird. Dazu muß die Fahrzeuggeschwindigkeit 53 in dem Mittelwertbildner 50 ausgewertet werden. Sobald der Mindestwert unterschritten ist, kann vorausgesetzt werden, daß sich der Strom-Sollwert 34 nach Ablauf der Ausregelzeit nicht mehr ändert und dann mit der Mittelwertbildung begonnen werden kann.

Bei anderen Hinterrad-Lenksystemen, bei denen bei einer vorgegebenen Geschwindigkeit (z.B. 65 km/h) nicht ausgelenkt und unterhalb dieser Geschwindigkeit in Gegenrichtung ausgelenkt wird, kann mit der Mittelwertbildung begonnen werden, sobald der Mittelwertbildner 50 feststellt, daß die Fahrzeuggeschwindigkeit innerhalb eines festgelegten Intervalls um die vorgegebene Geschwindigkeit liegt.

## Patentansprüche

1. Elektro-hydraulische Stellvorrichtung, insbesondere für die Hinterachslenkung (1) eines Kraftfahrzeugs, die aufweist:
- ein hydraulisches Stellglied (3), das einen hydraulischen Stellzylinder (10) und ein den Flüssigkeitsstrom zu dem Stellzylinder bestimmendes, elektrisch betätigtes Steuerventil (14) enthält, sowie
- ein elektronisches Steuergerät (2), durch das Sensorsignale ausgewertet und Steuersignale (44) für das Stellglied erzeugt werden,
**dadurch gekennzeichnet,** daß durch das Steuergerät (2) die hydraulische Nullstellung des Stellgliedes (3) durch Adaption des Strom-Sollwerts (34) in einem das Steuerventil (14) betätigenden Elektromagneten (15) selbsttätig eingestellt wird.

2. Stellvorrichtung nach Anspruch 1, dadurch gekennzeichnet, daß sie einen Lageregelkreis (30) aufweist, der einen untergeordneten Stromregelkreis (35) für den Elektromagneten (15, 16) und eine Adaptionsschaltung (36) für den Strom-Sollwert (34) aufweist.

3. Stellvorrichtung nach Anspruch 2, dadurch gekennzeichnet, daß die Adaptionsschaltung (36) einen Mittelwertbildner (36) enthält, in dem durch Mittelung des Strom-Sollwertes (34) ein Strom-Offset (42) gebildet wird, mit den eine Abweichung von der Nullstellung des Stellgliedes (3) kompensiert wird.

4. Stellvorrichtung nach Anspruch 3, dadurch gekennzeichnet, daß in dem Mittelwertbildner (34) die Soll-Stellgeschwindigkeit (40) des Stellgliedes (3) ausgewertet und nach Verschwinden der Soll-Stellgeschwindigkeit der Strom-Offset (42) gebildet wird.

5. Stellvorrichtung nach Anspruch 3, dadurch gekennzeichnet, daß dem Mittelwertbildner (34) ein Diskriminator (51) nachgeschaltet ist, in dem der Strom-Offset mit einem Schwellwert verglichen und nur nach Überschreiten dieses Schwellwerts als wirksamer Strom-Offset (42) ausgegeben wird.

6. Stellvorrichtung nach Anspruch 3, dadurch gekennzeichnet, daß der Mittelwertbildner (34) ein Tiefpaßfilter (48) enthält.

7. Stellvorrichtung nach Anspruch 3, dadurch gekennzeichnet, daß sie einen Differenzierer (39) aufweist, durch den aus dem Lage-Sollwert für die Stellvorrichtung (3) die Soll-Stellgeschindigkeit gebildet wird, und daß diese Soll-Stellgeschwindigkeit (40) in der Adaptionsschaltung (36) für die Mittelwertbildung ausgewertet wird.

8. Stellvorrichtung nach Anspruch 3, dadurch gekennzeichnet, daß die Fahrzeuggeschwindigkeit (53) in der Adaptionsschaltung (36) mit einem Geschwindigkeitsintervall verglichen und das Erreichen dieses Geschwindigkeitsintervalls für die Mittelwertbildung ausgewertet wird.

## Claims

1. Electro-hydraulic actuation device, in particular for the rear axle steering mechanism (1) of a motor vehicle, which actuation device has:
- a hydraulic actuation element (3) which contains a hydraulic actuation cylinder (10) and an electrically actuated control valve (14) which determines the flow of fluid to the actuation cylinder, and
- an electronic control unit (2) by means of which sensor signals are evaluated and control signals (44) are produced for the actuation element, characterized in that the hydraulic zero position of the actuation element (3) is automatically set by the control unit (2) by adaptation of the desired current value (34) in an electromagnet (15) which actuates the control valve (14).

2. Actuation device according to Claim 1, characterized in that it has a position control loop (30) which has a subordinate current control loop (35) for the electromagnet (15, 16) and an adaptation circuit (36) for the desired current value (34).

3. Actuation device according to Claim 2, characterized in that the adaptation circuit (36) contains an average value former (36) in which a current offset (42), with which a deviation from the zero position of the actuation element (3) is compensated for, is formed by averaging the desired current value (34).

4. Actuation device according to Claim 3, characterized in that the desired actuation speed (40) of the actuation element (3) is evaluated in the average value former (36) and the current offset (42) is formed after the desired actuation speed disappears.

5. Actuation device according to Claim 3, characterized in that a discriminator (51) is connected downstream of the average value former (36), in which discriminator (51) the current offset is compared with a threshold value and is output as an effective current offset (42) only after this threshold value is exceeded.

6. Actuation device according to Claim 3, characterized in that the average value former (36) contains a low-pass filter (48).

7. Actuation device according to Claim 3, characterized in that it has a differentiator (39) by means of which the desired actuation speed is formed from the desired position value for the actuation device (3), and in that this desired actuation speed (40) is evaluated in the adaptation circuit (36) for the formation of average values.

8. Actuation device according to Claim 3, characterized in that the vehicle speed (53) is compared in the adaptation circuit (36) with a speed interval and the reaching of this speed interval is evaluated for the formation of average values.

## Revendications

1. Dispositif de réglage électro-hydraulique, en particulier de la direction des roues arrière (1) d'un véhicule automobile, comportant :
- un organe de réglage hydraulique (3) comprenant un cylindre de réglage hydraulique (10) et une vanne-pilote (14) à actionnement électrique déterminant le courant de liquide en direction dudit cylindre de réglage, et
- un appareil de commande électronique (2) permettant d'analyser des signaux de palpeur et de produire des signaux de commande (44) pour l'organe de réglage,
caractérisé en ce que par l'appareil de commande (2) la position zéro hydraulique de l'organe de réglage (3) est réglée automatiquement par adaptation de la valeur prescrite de courant (34) dans un électro-aimant (15) actionnant la vanne-pilote (14).

2. Dispositif de réglage selon la revendication 1, caractérisé en ce qu'il comporte une boucle de régulation de position (30) qui comporte une boucle de régulation de courant (35) secondaire pour l'électro-aimant (15, 16) et un circuit d'adaptation (36) pour la valeur prescrite de courant (34).

3. Dispositif de réglage selon la revendication 2, caractérisé en ce que le circuit d'adaptation (36) comprend un calculateur de moyennes (36), dans lequel, en calculant la moyenne de la valeur prescrite de courant (34), est établi un décalage de courant (42), avec lequel est compensé un écart par rapport à la position zéro de l'organe de réglage (3).

4. Dispositif de réglage selon la revendication 3, caractérisé en ce que la vitesse de réglage prescrite (40) de l'organe de réglage (3) est analysée dans le calculateur de moyennes (34) et en ce que le décalage de courant (42) est établi après disparition de la vitesse de réglage prescrite.

5. Dispositif de réglage selon la revendication 3, caractérisé en ce qu'en aval du calculateur de moyennes (34) est placé un discriminateur (51), dans lequel le décalage de courant est comparé avec une valeur seuil et n'est sortie sous forme de décalage de courant effectif (42) qu'après dépassement de cette valeur seuil.

6. Dispositif de réglage selon la revendication 3, caractérisé en ce que le calculateur de moyennes (34) comporte un filtre passe-bas (48).

7. Dispositif de réglage selon la revendication 3, caractérisé en ce qu'il comporte un différentiateur (39), avec lequel est établie à partir de la valeur prescrite de position du dispositif de réglage (3) la vitesse de réglage prescrite et en ce que cette vitesse de réglage prescrite (40) est analysée dans le circuit d'adaptation (36) en vue du calcul de la valeur moyenne.

8. Dispositif de réglage selon la revendication 3, caractérisé en ce que la vitesse (53) du véhicule est comparée dans le circuit d'adaptation (36) avec un intervalle de vitesse et en ce que l'arrivée dans cet intervalle de vitesse est analysée en vue du calcul de la valeur moyenne.
